# EUROPÄISCHE PATENTSCHRIFT

(11) **EP 1 530 671 B1**
(45) Veröffentlichungstag und Bekanntmachung des Hinweises auf die Patenterteilung: **11.08.2010**
(21) Anmeldenummer: 03764921.7
(22) Anmeldetag: 24.06.2003
(51) Int. Cl.: F01D 17/14, F01D 17/16

(54) **Abgasturbolader für eine Brennkraftmaschine**
Exhaust gas turbocharger for an internal combustion engine
Turbocompresseur à gaz d'échappement pour moteur à combustion

(30) Priorität: 20.07.2002 DE 10233042
(43) Veröffentlichungstag der Anmeldung: 18.05.2005
(73) Patentinhaber: Daimler AG, 70327 Stuttgart (DE)
(72) Erfinder: FINGER, Helmut, 70771 Leinfelden-Echterdingen (DE); FLEDERSBACHER, Peter, 70619 Stuttgart (DE); LÖFFLER, Paul, 70199 Stuttgart (DE); SUMSER, Siegfried, 70327 Stuttgart (DE); WEIMANN, Hans-Jürgen, 71570 Oppenweiler (DE)
(74) Vertreter: JENSEN & SON
(86) Internationale Anmeldenummer: PCT/EP2003/006603
(87) Internationale Veröffentlichungsnummer: WO 2004/009961

(56) Entgegenhaltungen:
- CH-A- 407 401
- FR-A- 1 303 779
- US-A- 5 267 829
- US-A- 5 855 117
- US-B1- 6 224 333

## Beschreibung

Die Erfindung bezieht sich auf einen Abgasturbolader für eine Brennkraftmaschine nach dem Oberbegriff des Anspruches 1.

In der Druckschrift DE 199 55 508 C1 wird ein Abgasturbolader mit einer von den Abgasen einer Brennkraftmaschine anzutreibenden Abgasturbine sowie einem Verdichter im Ansaugtrakt beschrieben, dessen Verdichterrad von dem Turbinenrad über eine Welle angetrieben ist. Dem Verdichterrad ist über ein Verdichterrad-Zuströmkanal Verbrennungsluft unter Atmosphärendruck zuzuführen, die über die Drehbewegung des Verdichterrades auf einen erhöhten Ladedruck verdichtet wird, unter dem die Verbrennungsluft den Zylindern der Brennkraftmaschine zugeführt wird.

Der Verdichter weist einen Zusatzkanal auf, welcher sich etwa parallel zum Verdichterrad-Zuströmkanal erstreckt und im Bereich des Verdichterrades radial in den Verdichterrad-Zuströmkanal einmündet. Über den Zusatzkanal kann ebenfalls Verbrennungsluft zugeführt werden. Im Mündungsbereich zum Verdichterrad-Zuströmkanal ist ein verstellbares Leitgitter angeordnet, welches zwischen einer den Mündungsquerschnitt minimierenden Stauposition und einer den Querschnitt maximal öffnenden Freigabeposition zu verstellen ist. Weiterhin ist im Verdichterrad-Zuströmkanal stromauf der Mündung von Zusatzkanal in den Verdichterrad-Zuströmkanal eine Drosselklappe angeordnet, über die der zuzuführende Luftmassenstrom durch den Verdichterrad-Zuströmkanal einstellbar ist.

Um die Drehzahlspreizung des Abgasturboladers zu minimieren und auch in Betriebszuständen niedriger Last und Drehzahl der Brennkraftmaschine ein nennenswertes Drehzahlniveau des Laders aufrechterhalten zu können, kann der Verdichter auch im Turbinenbetrieb eingesetzt werden. Hierfür wird die Drosselklappe im Verdichterrad-Zuströmkanal in ihre Schließposition verstellt und die Verbrennungsluft über den Zusatzkanal radial auf die Schaufelblätter des Verdichterrades geleitet, das daraufhin einen Drehimpuls für eine Zusatzleistung erfährt. Über das Verdichterrad wird eine Entspannung der zugeführten Verbrennungsluft erreicht, so dass im Lufteinlass der Brennkraftmaschine bei Teillast der Brennkraftmaschine ein gewünschter Unterdruck zu realisieren ist. Auf diese Weise wird der Lader in Rotation gehalten, wodurch das transiente Verhalten des Abgasturboladers deutlich verbessert werden kann. Der Übergang in den Verdichterbetrieb bei ansteigender Last kann in kürzerer Zeit vollzogen werden. US 6 224 333 offenbart einen Abgasturbolader weist einer Leitgitterartigen Struktur im zuströmbereich der Turbine.

Von diesem Stand der Technik ausgehend liegt der Erfindung das Problem zugrunde, den Wirkungsgrad eines Abgasturboladers mit einfachen Mitteln weiter zu verbessern.

Dieses Problem wird erfindungsgemäß mit den Merkmalen des Anspruches 1 gelöst. Die Unteransprüche geben zweckmäßige Weiterbildungen an.

Der Verdichter im erfindungsgemäßen Abgasturbolader besitzt ein erstes Leitgitter sowie ein zweites Leitgitter im Zuströmbereich zum Verdichterrad, wobei jedes Leitgitter eine verstellbare Gittergeometrie aufweist. Auf diese Weise sind zusätzliche Einstellmöglichkeiten gegeben und können diverse Strömungsverhältnisse in einem weiten Parameterbereich im Zuströmbereich zum Verdichterrad realisiert werden, wodurch bei niedrigen Lasten der Brennkraftmaschine ein Turbinenbetrieb des Verdichters einstellbar ist, so dass der Lader auch in diesen Betriebszuständen auf einer hohen Mindestdrehzahl gehalten werden kann.

Zur Einstellung dieses Turbinenbetriebes des Verdichters wird zweckmäßig eines der Leitgitter in seine Stauposition mit minimalem oder völlig geschlossenem Querschnitt überführt und das andere Leitgitter in Öffnungsstellung versetzt, wobei die Leitgitter in der Weise angeordnet sind, dass sowohl ein Turbinenbetrieb als auch ein konventioneller Verdichterbetrieb möglich ist. Das bei niedrigen Lasten zu öffnende Leitgitter befindet sich hierbei bevorzugt in einem das Verdichterrad radial umgreifenden Mündungsbereich zwischen einem dem Verdichterrad-Zuströmkanal vorgelagerten Luftsammelraum und dem Zuströmkanal, wohingegen das zweite Leitgitter, das bei niedrigen Lasten in seine Staustellung überführt wird, demgegenüber axial vorgelagert ist und in einem Mündungsquerschnitt des Luftsammelraumes zum Verdichterrad-Zuströmkanal stromauf des Verdichterrades positioniert ist. Im Turbinenbetrieb trifft somit die zuzuführende Verbrennungsluft radial bzw. mit tangentialer Komponente auf das Verdichterrad, wodurch diesem ein Drehimpuls aufgeprägt wird und als Kaltluftturbine zusätzliche Antriebsleistung für den Rotor zur Verfügung steht.

Im transienten Übergangsbereich ist dagegen zweckmäßig eine fortschreitende Verstellung der Leitgitter von Öffnungsstellung in Staustellung bzw. umgekehrt möglich. Das für den Turbinenbetrieb verantwortliche, verdichterradnahe Leitgitter kann kontinuierlich oder diskontinuierlich - in diskreten Schritten - aus seiner Öffnungsposition in die Stauposition überführt werden; zugleich wird das vorgelagerte, verdichterradferne Leitgitter, welches dem Verdichterbetrieb zugeordnet ist, ebenfalls kontinuierlich oder diskontinuierlich aus der Stauposition in die Öffnungsposition überführt, so dass ein zunehmend großer Luftstrom durch das vorgelagerte Leitgitter strömt. Die Möglichkeit, jedes Leitgitter graduell zwischen seiner jeweiligen Öffnungs- und Stauposition überführen zu können, ermöglicht einen stetigen Übergang vom Kaltluft-Turbinenbetrieb zum Verdichterbetrieb. So ist es insbesondere möglich, bei ansteigender Last und Drehzahl der Brennkaftmaschine zunächst den größeren Anteil des zuzuführenden Luftmassenstromes über das dem Kaltluft-Turbinenbetrieb zugeordnete Leitgitter zu führen und den Anteil über das vorgelagerte Leitgitter noch gering zu halten. Dieses Verhältnis kehrt sich mit weiter ansteigender Last der Brennkraftmaschine zugunsten eines immer größer werdenden Luftmassenstrom-Anteiles durch das vorgelagerte Leitgitter um. Auf diese Weise kann ein plötzlicher, schlagartiger Wechsel vom Kaltluft-Turbinenbetrieb in den Verdichterbetrieb und damit ein Drehzahlabfall des Laders vermieden werden.

Zur Überführung der Leitgitter zwischen ihren jeweiligen Extrempositionen - Stauposition einerseits und Öffnungsposition andererseits - ist sowohl eine Ausführung mit einem gemeinsamen Stell- bzw. Betätigungsorgan für beide Leitgitter als auch eine Ausführung mit getrennten Betätigungsorganen möglich. Im Falle eines gemeinsamen Betätigungsorganes ist dieses zweckmäßig als Stellhülse ausgeführt, bei deren Stellbewegung die Leitgitter in entgegengesetzte Positionen verstellt werden. Bei der Stellhülse handelt es sich insbesondere um eine axial verschiebliche Schiebehülse, wobei in besonders vorteilhafter Ausführung jeweils ein Teil der Gittergeometrie der beiden Leitgitter an den axial gegenüberliegenden Stirnseiten der Schiebehülse gehalten ist, beispielsweise eine Aufnahmematrize zur Aufnahme eines Leitgitterringes einerseits und auf der gegenüberliegenden Stirnseite ein Leitgitterring andererseits. Selbstverständlich sind aber auch Ausführungen möglich, bei denen gleichartige Gittergeometrien im Bereich der beiden axialen Stirnseiten der Schiebehülse angeordnet sind.

Gemäß einer weiteren Ausführung kann die Stellhülse auch verdrehbar gelagert sein, wobei in diesem Fall die Rotationsbewegung der Stellhülse zum Verstellen der Gittergeometrien genutzt wird. Schließlich kann es auch zweckmäßig sein, die Stellhülse sowohl axial verschieblich als auch drehbar zu lagern und die axiale Stellbewegung einem der beiden Leitgitter und die Drehbewegung dem anderen Leitgitter zuzuordnen, wodurch eine Entkopplung der Stellbewegungen beider Leitgitter ermöglicht wird.

Eine entkoppelte Bewegung wird insbesondere auch dadurch ermöglicht, dass zwei separat ausgebildete Betätigungsorgane vorgesehen sind, die jeweils einem Leitgitter zugeordnet sind und unabhängig voneinander betätigbar sind. In dieser Ausführung ist eine Kopplung der Bewegungen über die Steuerung jedes Betätigungsorganes möglich, kinematisch sind jedoch beide Betätigungsorgane unabhängig voneinander ausgebildet. Man erhält auf diese Weise einen zusätzlichen mechanischen Freiheitsgrad für die Einstellung jedes Leitgitters, wodurch zusätzliche Einstellkombinationen für die Positionen der Leitgitter realisierbar sind und insgesamt eine genauere und besser an die jeweilige Situation angepasste Einstellung der Leitgitter durchführbar ist.

In einer vorteilhaften Ausführung sind beide Betätigungsorgane jeweils als Schiebehülse ausgebildet, die jeweils axial verschiebbar sind, wobei eine der beiden Schiebehülsen ausschließlich einem Leitgitter zugeordnet ist, die andere Schiebehülse dagegen in vorteilhafter Weiterbildung zur Verschiebung beider Leitgitter ausgebildet ist. Wird die beiden Leitgittern zugeordnete Schiebehülse betätigt, so wird mit einer gemeinsamen Stellbewegung der Querschnitt in beiden Leitgittern verändert. Bei einer Betätigung der gegenüberliegenden Schiebehülse, die insbesondere zur Geometrieverstellung des dem Verdichterbetrieb zugeordneten Leitgitters herangezogen wird, wird dagegen das andere Leitgitter nicht verstellt. Das von beiden Schiebehülsen beaufschlagte radferne Leitgitter kann in der Weise verstellt werden, dass der Mündungsquerschnitt, in welchem das radnahe Leitgitter angeordnet ist, bei Volllast der Brennkraftmaschine praktisch unbeeinflusst von dem radfernen Leitgitter ist.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer aufgeladenen Brennkraftmaschine mit einem Abgasturbolader mit variabler Turbinengeometrie und einem Verdichter mit zwei verstellbaren Leitgittern,
- Fig. 2: einen Längsschnitt durch einen Verdichter, mit dem ersten, Verdichterrad nahen Leitgitter in Öffnungs- stellung und dem zweiten, axial auf Abstand zum Verdichterrad angeordneten Leitgitter in Stauposi- tion,
- Fig. 3: eine Fig. 2 entsprechende Darstellung, jedoch mit dem Verdichterrad nahen Leitgitter in Stauposition und dem axial beabstandeten Leitgitter in einer ersten Öffnungsposition,

- Fig. 4: eine weitere, den Fig. 2 und 3 entsprechende Dar- stellung, jedoch mit dem axial beabstandeten Leit- gitter in der zweiten Öffnungsposition,
- Fig. 5: eine stirnseitige Ansicht in schematischer Darstel- lung auf das Verdichterrad nahe Leitgitter (mit kleinerem Radius) und das mit größerem axialen Ab- stand angeordnete Leitgitter (mit größerem Radius),
- Fig. 6: eine Fig. 5 entsprechende Darstellung, wobei das äußere Leitgitter in einem Abschnitt mit einer ge- ringeren Anzahl an Leitschaufeln gezeigt ist,
- Fig. 7: eine weitere Ansicht auf die Leitgitter, wobei das äußere Leitgitter in einem dritten Abschnitt mit einer minimalen Anzahl an Leitschaufeln gezeigt ist.

In den Figuren sind gleiche Bauteile mit gleichen Bezugszeichen versehen.

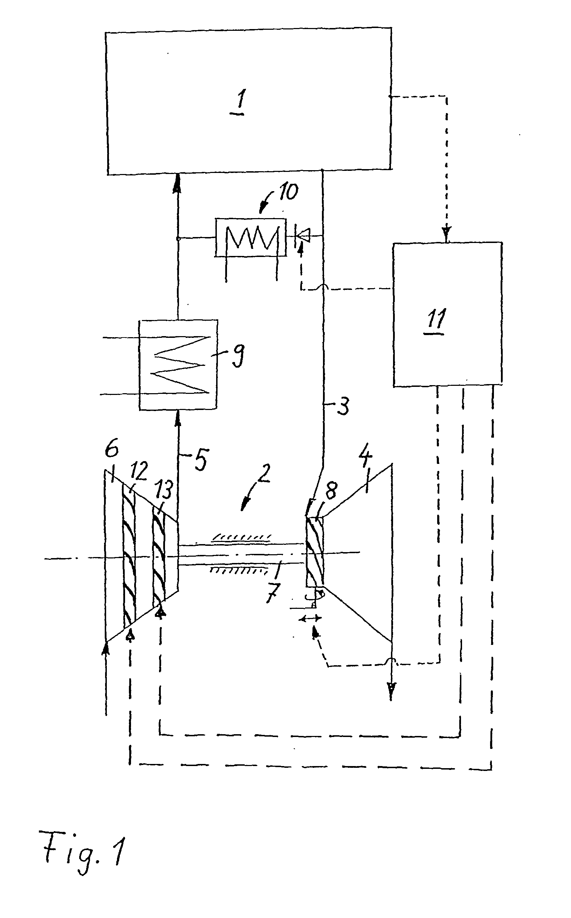

Die in Fig. 1 dargestellte Brennkraftmaschine 1 ist mit einem Abgasturbolader 2 ausgestattet, der in einem Abgasstrang 3 der Brennkraftmaschine eine Abgasturbine 4 und im Ansaugtrakt 5 einen Verdichter 6 umfasst, dessen Verdichterrad vom Turbinenrad über eine Welle 7 angetrieben wird. Im Betrieb der Brennkraftmaschine wird das Turbinenrad von den Abgasen in Rotation versetzt, woraufhin im Verdichter Verbrennungsluft aus der Umgebung angesaugt und auf einen erhöhten Druck verdichtet wird. Die Abgasturbine 4 ist zusätzlich mit einer variabel einstellbaren Turbinengeometrie 8 ausgestattet, welche eine veränderliche Einstellung des wirksamen Strömungseintrittsquerschnittes zum Turbinenrad in Abhängigkeit von aktuellen Zustands- und Betriebsgrößen der Brennkraftmaschine erlaubt.

Stromab des Verdichters 6 ist im Ansaugtrakt 5 ein Ladeluftkühler 9 angeordnet, in welchem die verdichtete Ladeluft gekühlt wird. Im weiteren Verlauf wird die Ladeluft unter Ladedruck den Zylindereinlässen der Brennkraftmaschine 1 zugeführt.

Des Weiteren ist der Brennkraftmaschine 1 eine Abgasrückführeinrichtung 10 zugeordnet, über die Abgas aus dem Abgasstrang 3 stromauf der Abgasturbine 4 in den Ansaugtrakt 5 stromab des Ladeluftkühlers 9 rückführbar ist. Die Abgasrückführeinrichtung 10 umfasst eine Rückführleitung zwischen Abgasstrang und Ansaugtrakt sowie ein in der Rückführleitung angeordnetes, einstellbares Ventil und einen Abgaskühler.

Der Verdichter 6 ist mit einer variablen Verdichtergeometrie ausgestattet, welche zwei Leitgitter 12 und 13 umfasst, die beide im Zuströmbereich zum Verdichterrad angeordnet sind und zwischen einer minimalen Stauposition und einer maximalen Öffnungsposition zu verstellen sind. Die Funktion der Leitgitter 12 und 13 wird im Folgenden an Hand der weiteren Figuren dargestellt.

Der Brennkraftmaschine 1 ist eine Regel- und Steuereinheit 11 zugeordnet, über die in Abhängigkeit von Zustands- und Betriebsgrößen der Brennkraftmaschine 1 die diversen, der Brennkraftmaschine zugeordneten Aggregate einzustellen sind, insbesondere das Rückführventil in der Abgasrückführeinrichtung 10, die variable Turbinengeometrie 8 sowie die beiden Leitgitter 12 und 13 im Verdichter 6.

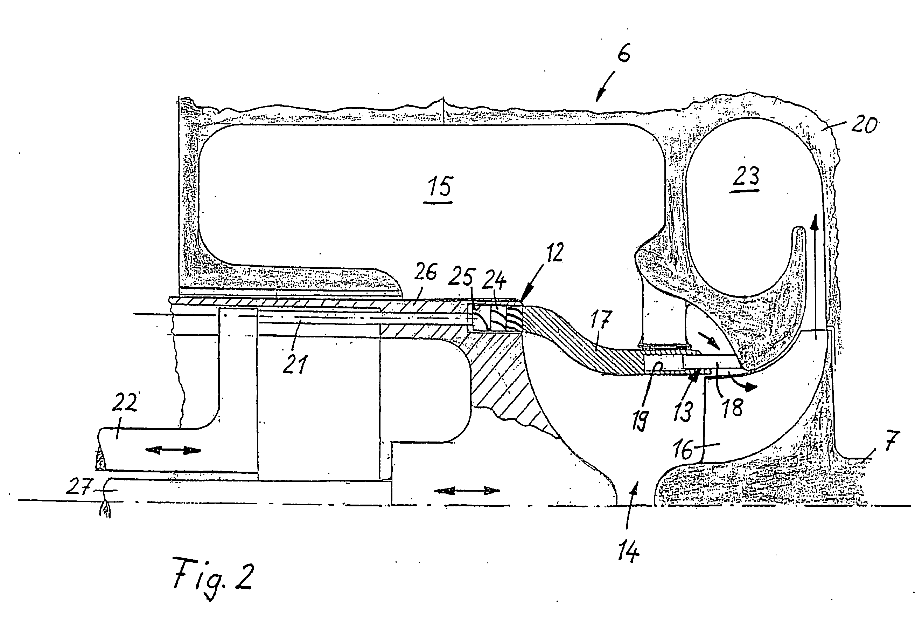

Wie der Schnittdarstellung nach Fig. 2 zu entnehmen, befindet sich das Leitgitter 13 des Verdichters 6 im Mündungsbereich zwischen einem Luftsammelraum 15, in welchen von außen Verbrennungsluft in den Verdichter eingeleitet wird, zu einem Verdichterrad-Zuströmkanal 14, in welchem das Verdichterrad 16 drehbar gelagert ist. Der Mündungsbereich umgreift das Verdichterrad 16 zumindest teilweise radial. Die Gittergeometrie des Leitgitters 13 besteht aus einem Leitgitterring 18 mit Leitschaufeln, wobei der Leitgitterring 18 ringförmig in dem Mündungsbereich angeordnet ist und die Verdichterradschaufeln des Verdichterrades 16 zumindest teilweise radial umgreift, sowie einer Aufnahmematrize 19, in die der Leitgitterring 18 axial einschiebbar ist. Der Leitgitterring 18 ist gehäusefest mit einer Wandung des Verdichtergehäuses 20 verbunden. Die Aufnahmematrize 19 ist im Bereich einer axialen Stirnseite einer Schiebehülse 17 aufgebildet, welche ein Betätigungsorgan für das Leitgitter 13 bildet. Die Schiebehülse 17 ist in Achsrichtung des Laders verschiebbar ausgeführt und wird über eine Schiebestange 21 von einem Stellglied 22 zwischen zwei axialen Endpositionen verstellt. Über die axiale Stellbewegung der Schiebehülse 17 wird die Gittergeometrie des Leitgitters 13 zwischen einer den Mündungsquerschnitt minimierenden bzw. komplett verschließenden Stauposition und einer den Mündungsquerschnitt maximierenden Öffnungsposition verstellt. In Fig. 2 befindet sich die Gittergeometrie des Leitgitters 13 in ihrer Öffnungsposition mit maximal möglichem Querschnitt. Diese Position wird insbesondere in Betriebszuständen der Brennkraftmaschine mit niedriger Last eingenommen, in welchen das Verdichterrad 16 im Turbinenbetrieb gefahren wird, in dem der Druck stromab des Verdichters geringer ist als stromauf des Verdichters.

Die radial aus dem Luftsammelraum 15 ausströmende und auf das Verdichterrad 16 auftreffende Verbrennungsluft übt auf das Verdichterrad einen Drehimpuls aus, welcher dem Verdichterrad Leistung zukommen lässt. Die Verbrennungsluft wird im weiteren Verlauf über einen Diffusor in einen Spiralkanal 23 geleitet und erfährt hierbei eine Entspannung. Aus dem Spiralkanal 23 wird die Verbrennungsluft im weiteren Verlauf nach dem Durchströmen des Ladeluftkühlers in die Zylindereinlässe der Brennkraftmaschine geleitet.

Auf der dem Verdichterrad nahen Leitgitter 13 gegenüberliegenden axialen Stirnseite der Schiebehülse 17 befindet sich das weitere Leitgitter 12, welches sowohl radial als auch axial einen größeren Abstand zum Verdichterrad 16 aufweist als das verdichterradnahe, dem Turbinenbetrieb des Verdichters zugeordnete Leitgitter 13. Die Gittergeometrie des verdichterradfernen Leitgitters 12 umfasst in entsprechender Weise wie das Leitgitter 13 einen Leitgitterring 24, welcher an der axialen Stirnseite der Schiebehülse 17 befestigt ist, sowie eine Aufnahmematrize 25, die in einer weiteren, die Funktion eines Betätigungsorgans übernehmenden Schiebehülse 26 ausgebildet ist. Das verdichterradferne Leitgitter 12 sitzt in einem weiteren Mündungsquerschnitt zwischen dem Luftsammelraum 15 und dem Verdichterrad-Zuströmkanal 14. In der in Fig. 2 dargestellten Schließ- bzw. Stauposition ist der Leitgitterring 24 vollständig in die Aufnahmematrize 25 eingefahren, so dass der Mündungsquerschnitt vollständig verschlossen ist. Dieser Mündungsquerschnitt ist dem Verdichterbetrieb zugeordnet und wird mit zunehmender Last der Brennkraftmaschine durch Verstellung des Leitgitters 12 geöffnet.

Da die Gittergeometrien der beiden Leitgitter 12 und 13 sich auf axial gegenüberliegenden Stirnseiten der Schiebehülse 17 befinden, bewirkt eine über ein Stellglied 22 auf die Schiebehülse 17 ausgeübte axiale Stellbewegung eine simultane Überführungsbewegung sowohl des verdichternahen Leitgitterringes 18 als auch des verdichterfernen Leitgitterringes 24. Über die Schiebehülse 17 sind die Überführungsbewegungen beider Leitgitterringe kinematisch gekoppelt.

Das Stellglied 22 ist axial verschieblich geführt. Die Stellbewegung des Stellglieds 22 wird über eine Schiebestange 21 auf die Schiebehülse 17 übertragen, wobei die Schiebestange 21 in einem Führungskanal in einer zweiten Schiebehülse 26 frei verschieblich geführt ist.

Eine zusätzliche Einstellmöglichkeit ist über eine axiale Schiebebewegung der zweiten Schiebehülse 26 gegeben, ausgelöst über eine Betätigung eines weiteren, axial verschieblichen Stellgliedes 27. Im axialen Stirnbereich der Schiebehülse 26 ist die Aufnahmematrize 25 für die Aufnahme des Leitgitterringes 24 des Leitgitters 12 ausgebildet, wobei eine axiale Stellbewegung der weiteren Schiebehülse 26 kinematisch unabhängig von der Stellbewegung der ersten Schiebehülse 17 ausgeführt werden kann.

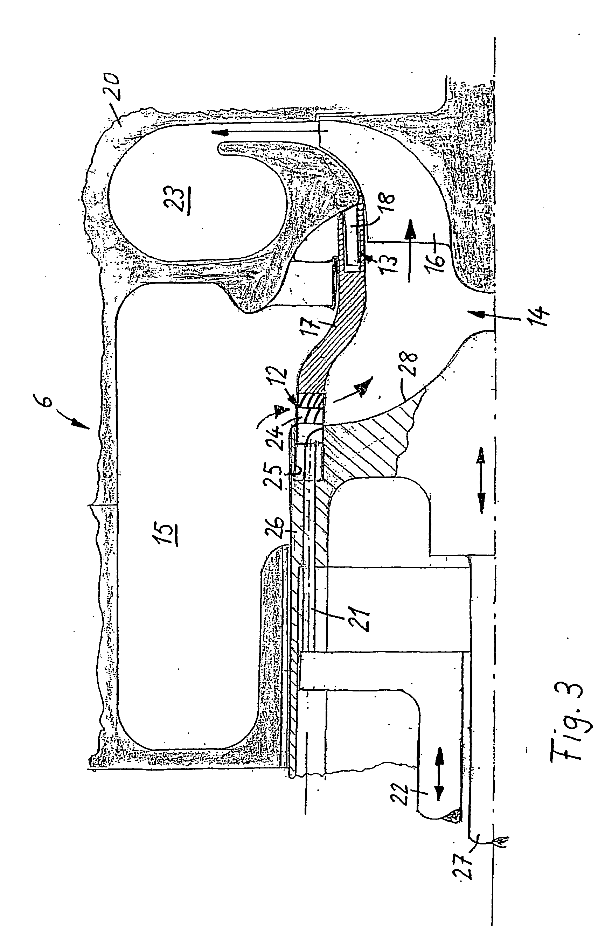

In Fig. 3 ist der Verdichter 6 in einer Stellung gezeigt, in welcher das Leitgitter 13 sich in Schließposition befindet und das Leitgitter 12 zum Teil geöffnet ist. Die Schiebehülse 17 kann axial so weit in Richtung Verdichterrad 16 verschoben werden, bis die axiale Stirnseite der Schiebehülse 17 an die Wandung des Verdichters anschlägt, an der der Leitgitterring 18 gehalten ist. Durch diese Schiebebewegung der Schiebehülse 17 wird zugleich das axial vorgelagerte Leitgitter 12 in eine Teiloffenstellung überführt, indem der Leitgitterring 24 aus seiner Aufnahmematrize 25 zum Teil herausgeschoben wird. Die Luft im Luftsammelraum 15 kann nun durch den Leitgitterring 24 radial in den Verdichterrad-Zuströmkanal 14 einströmen, wobei die Stirnseite 28 der zweiten Schiebehülse 26 eine Umlenkfläche bzw. Drallfläche für die in den Verdichterrad-Zuströmkanal 14 einströmende Verbrennungsluft bildet. Die Stirnseite 28 ist gekrümmt ausgeführt und weist einen konkaven Querschnitt auf, so dass die radial einströmende Verbrennungsluft eine Umleitung in Achsrichtung erfährt und axial auf die Verdichterradschaufeln des Verdichters 16 auftrifft.

Der Leitgitterring 24 des verdichterradfernen Leitgitters 12 ist axial beispielsweise in drei Abschnitte unterteilt, in denen jeweils eine unterschiedliche Anzahl an Leitgitterschaufeln über den Umfang verteilt angeordnet ist. Ein nicht dargestellter Lösungsvorschlag betrifft eine zu Gitter 24a unveränderte Schaufelanzahl, bei dem die Sehnenlänge der Schaufel mit wachsender Schaufelhöhe gekürzt ist. In der in Fig. 3 gezeigten Position sind die ersten beiden Leitgitterabschnitte des Leitgitterringes 24 aus der Aufnahmematrize 25 axial herausgeschoben, der dritte Abschnitt des Leitgitterringes 24 befindet sich dagegen noch innerhalb der Aufnahmematrize 25. Die unterschiedliche Anzahl an Leitgitterschaufeln in jedem Abschnitt des Leitgitterringes 24 gestattet es, in Abhängigkeit von der aktuellen axialen Position des Leitgitters 12 unterschiedliche Strömungsverhältnisse durch das Leitgitter 12 einzustellen. Mit abnehmender Schaufelanzahl nimmt der Strömungsquerschnitt im Mündungsbereich zwischen Luftsammelraum 15 und Verdichterrad-Zuströmkanal 14 zu, so dass ein zunehmend größerer Luftmassenstrom übertreten kann.

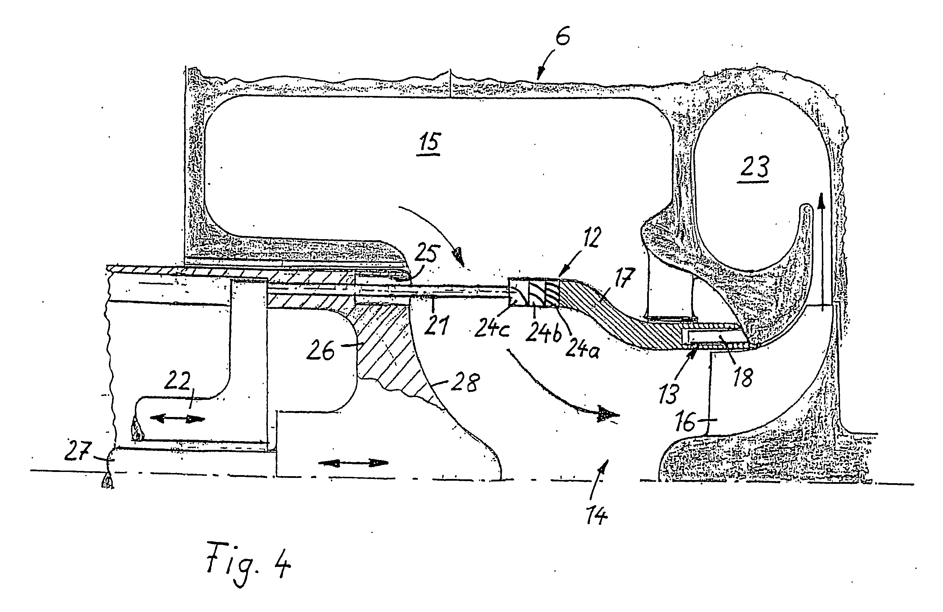

In Fig. 4 befindet sich die Schiebehülse 17 in ihrer Anschlagposition an der den Leitgitterring 18 tragenden Verdichtergehäusewandung. Zugleich ist die zweite Schiebehülse 26 axial in Gegenrichtung herausgezogen, so dass der Leitgitterring 24 des Verdichterrad fernen Leitgitters 12 vollständig aus der Aufnahmematrize 25 in der Schiebehülse 26 entfernt ist und lediglich die Schubstange 21, über die die Schiebehülse 17 mit dem Stellglied 22 verbunden ist, in den Mündungsquerschnitt zwischen Luftsammelraum 15 und Verdichterrad-Zuströmkanal 14 einragt. Dadurch sind praktisch keine Strömungshindernisse im Mündungsbereich mehr vorhanden und es kann ein maximal möglicher Luftmassenstrom übertreten und axial auf das Verdichterrad 16 auftreffen.

Es kann gegebenenfalls auch zweckmäßig sein, eines oder beide Leitgitter 12 und 13 mit verstellbaren Leitschaufeln auszuführen, welche von geeigneten Stellorganen um ihre jeweilige Schwenkachse zwischen Stauposition und Öffnungsposition verschwenkt werden. Diese Ausführung kann sowohl alternativ als auch kumulativ zur axialen Stellbewegung der Leitgitter vorgesehen sein.

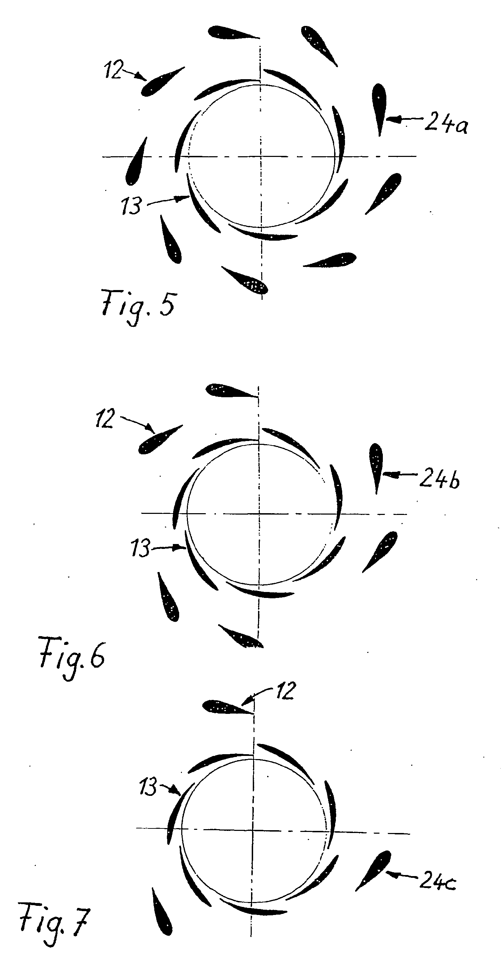

Die verschiedenen Leitgitterringabschnitte des verdichterradfernen Leitgitters sind in Fig. 4 mit den Bezugszeichen 24a, 24b und 24c bezeichnet. Diese Bezeichnungen werden auch in den folgenden Figuren 5, 6 und 7 verwendet, in denen jeweils in Draufsicht sowohl das verdichterradnahe Leitgitter 13 als auch das verdichterradferne Leitgitter 12 dargestellt sind, wobei Letzteres jeweils in den unterschiedlichen axialen Abschnitten 24a, 24b und 24c gezeigt ist.

In der Draufsicht gemäß den Fig. 5 bis 7 umgreift das verdichterradferne Leitgitter 12 das verdichterradnahe Leitgitter 13, bei einem axialen Abstand der beiden Leitgitter. Im ersten Leitgitterringabschnitt 24a des verdichterradfernen Leitgitters 12 ist eine maximale Anzahl an Leitschaufeln über den Umfang verteilt angeordnet. In den weiteren Abschnitten 24b und 24c gemäß den Fig. 6 bzw. 7 nimmt die Anzahl an Leitschaufeln dagegen ab. Im Ausführungsbeispiel befinden sich im mittleren Abschnitt 24b nur zwei Drittel der Leitschaufeln des ersten Abschnittes, im dritten Abschnitt 24c sogar nur ein Drittel der Leitschaufelanzahl des ersten Abschnittes 24a. Der Strömungswiderstand wird dadurch weiter herabgesetzt.

## Patentansprüche

1. Abgasturbolader für eine Brennkraftmaschine, mit einer Abgasturbine (4) im Abgasstrang (3) und einem Verdichter (6) im Ansaugtrakt (5), wobei in einem Verdichterrad-Zuströmkanal (14) ein Verdichterrad (16) angeordnet ist, das von einem Turbinenrad der Abgasturbine (4) angetrieben ist, mit einer einstellbaren Drosseleinrichtung stromauf des Verdichterrades (16) zur Regulierung des zuzuführenden Luftmassenstromes, **dadurch gekennzeichnet,**
**dass** die Drosseleinrichtung ein erstes Leitgitter (12) und ein zweites Leitgitter (13) im Zuströmbereich zum Verdichterrad (16) umfasst, wobei jedes Leitgitter (12, 13) eine verstellbare Gittergeometrie aufweist.

2. Abgasturbolader nach Anspruch 1,
**dadurch gekennzeichnet,**
**dass** die beiden Leitgitter (12, 13) zueinander axial beabstandet sind.

3. Abgasturbolader nach Anspruch 1 oder 2,
**dadurch gekennzeichnet,**
**dass** die Gittergeometrien jeweils einen Leitgitterring (18, 24) mit Leitschaufeln und eine Aufnahmematrize (19, 25) zur Aufnahme der Leitgitterringe (18, 24) umfassen.

4. Abgasturbolader nach einem der Ansprüche 1 bis 3, **dadurch gekennzeichnet,**
**dass** die Stellbewegungen der Gittergeometrien beider Leitgitter (12, 13) über ein gemeinsames Betätigungsorgan gekoppelt sind.

5. Abgasturbolader nach Anspruch 4,
**dadurch gekennzeichnet,**
**dass** das gemeinsame Betätigungsorgan eine axial verstellbare Schiebehülse (17) umfasst.

6. Abgasturbolader nach Anspruch 3 und 5,
**dadurch gekennzeichnet,**
**dass** die Schiebehülse (17) im Bereich einer ersten axialen Stirnseite eine Aufnahmematrize (19) und im Bereich der gegenüberliegenden axialen Stirnseite einen Leitgitterring (24) aufweist.

7. Abgasturbolader nach einem der Ansprüche 1 bis 6, **dadurch gekennzeichnet,**
**dass** jeder Gittergeometrie jeweils ein Betätigungsorgan zugeordnet ist.

8. Abgasturbolader nach Anspruch 7,
**dadurch gekennzeichnet,**
**dass** die beiden Betätigungsorgane jeweils als Schiebehülse (17, 26) ausgebildet sind.

9. Abgasturbolader nach Anspruch 7 oder 8,
**dadurch gekennzeichnet,**
**dass** ein Betätigungsorgan (26) in Öffnungsposition eines Leitgitters eine Drallfläche (28) für den durchströmenden Luftmassenstrom bildet.

10. Abgasturbolader nach einem der Ansprüche 1 bis 9, **dadurch gekennzeichnet,**
**dass** dem Verdichterrad (16) ein mit dem Verdichterrad-Zuströmkanal (14) kommunizierender Luftsammelraum (15) vorgelagert ist, wobei im Übergang von Luftsammelraum zu Verdichterrad-Zuströmkanal mindestens ein Leitgitter (12, 13) angeordnet ist.

11. Abgasturbolader nach Anspruch 10,
**dadurch gekennzeichnet,**
**dass** der Luftsammelraum (15) den Verdichterrad-Zuströmkanal (14) zumindest teilweise radial umgreift.

12. Abgasturbolader nach einem der Ansprüche 1 bis 11, **dadurch gekennzeichnet,**
**dass** ein Leitgitter (12) über seine axiale Erstreckung mindestens zwei Abschnitte (24a, 24b, 24c) mit unterschiedlicher Gittergeometrie aufweist.

13. Abgasturbolader nach Anspruch 12,
**dadurch gekennzeichnet,**
**dass** die Abschnitte (24a, 24b, 24c) jeweils eine unterschiedliche Anzahl an Leitgitterschaufeln aufweisen.

14. Abgasturbolader nach Anspruch 12,
**dadurch gekennzeichnet,**
**dass** die Leitschaufeln des Leitgitters (12) mit wachsender Schaufelhöhe - von einer unteren Schaufelhöhe ausgehend - kontinuierlich eine Verkürzung der Sehnenlänge erfahren.

## Claims

1. Turbocharged for an interval combustion engine, with an exhaust gas turbine (4) in the in the exhaust train (3) and a compressor (6) in the intake train (5), a compressor impeller (16) driven by a turbine wheel of the exhaust gas turbine (4) being provides in a compressor impeller inlet passage (14), and with an adjustable restrictor device located upstream of the compressor impeller (16) to regulate the air mass flow to be supplied,
**characterised in that**
the restrictor devise comprises a first guide grid (12) and a second guide grid (13) in the inlet region to the compressor impeller (16), each guide grid (12, 13) having an adjustable and geometry.

2. Turbocharger according to claim 1,
**characterised in that**
the two guide grids (12, 13) are arranged at an axial distance from one another.

3. Turbocharged according to claim 1 or 2 **characterised in that**
each of the grid geometries comprises a guide grid ring (18, 24) with guide vanes and an accommodation matrix (19, 25) for the accommodation of the guide grid rings (18, 24).

4. Turbocharger according to any of claims 1 to 3,
**characterised in that**
the setting motions of the grid geometries of the two guide grids (12, 13) are coupled by way of a common actuating element.

5. Turbocharged according to claim 4,
**characterised in that**
the common actuating element comprises an axially adjustable sliding sleeve (17).

6. Turbocharger according to claims 3 and 5,
**characterised in that**
the sliding sleeve (17) is provided with an accommodation matrix (19) in the region of a first axial end face and with a guide grid ring (24) in the region of the opposite axial end face.

7. Turbocharged according to any of claims 1 to 6,
**characterised in that**
an actuating element is assigned to each grid geometry.

8. Turbocharged according to claim 7,
**characterised in that**
each of the two actuating is designed as a sliding sleeve (17, 26).

9. Turbocharger according to claim 7 or 8,
**characterised in that**
an actuating element (26) forms a swirl surface (28) for the air mass flow through in the open position of a guide grid.

10. Turbocharger according to any of claims 1 to 9,
**characterised in that**
an air collecting chamber (15) communicating with the compressor impeller inlet passage (14) is provided upstream of the compressor impeller (16), at least one guide grid (12, 13) being located in the transition region from the air collecting chamber to the compressor impeller inlet passage.

11. Turbocharger according to claim 10,
**characterised in that**
the air collecting chamber (15) at least partially surrounds the compressor impeller inlet passage (14) in the radial direction.

12. Turbocharger according to any of claims 1 to 11,
**characterised in that**
a guide grid (12) comprises ay least two sections (24a, 24b, 24c) having different grid geometries along its axial dimension.

13. Turbocharger according to claim 12,
**characterised in that**
each of the sections (24b, 24c) has a different number of guide grid vanes.

14. Turbocharger according to claim 12,
**characterised in that**
the chord length of the guide vanes of the guide grid (12) becomes shorter as the vane height - starting from a low vane height - increases.

## Revendications

1. Turbocompresseur à gaz d'échappement pour un moteur à combustion interne comprenant une turbine (4) à gaz d'échappement dans le système (3) de gaz d'échappement et un compresseur (6) dans la partie (5) d'admission, une roue (16) de compresseur étant disposé dans un canal (14) d'amenée de la roue du compresseur qui est entraînée par une roue de turbine de la turbine (4) à gaz d'échappement, un dispositif d'étranglement réglable est placé en amont de la roue (16) du compresseur pour réguler le flux massique d'air à acheminer, **caractérisé en ce que** ce dispositif d'étranglement comprend une première (12) et une seconde (13) grille de guidage dans la zone d'amenée au niveau de la roue (16) du compresseur, chacune de ces grilles (12, 13) possédant une géométrie variable.

2. Turbocompresseur à gaz d'échappement selon la revendication 1, **caractérisé en ce que** les deux grilles de guidage (12, 13) sont espacées axialement l'une de l'autre.

3. Turbocompresseur à gaz d'échappement selon la revendication 1 ou 2, **caractérisé en ce que** les géométries des grilles comprennent chacune un anneau (18, 24) de grille de guidage avec des aubes directrices et une matrice (19, 25) de réception pour recevoir les anneaux (18, 24) des grilles de guidage.

4. Turbocompresseur à gaz d'échappement selon l'une quelconque des revendications 1 à 3, **caractérisé en ce que** les mouvements de réglage des géométries des deux grilles de guidage (12, 13) sont couplés par un organe de commande commun.

5. Turbocompresseur à gaz d'échappement selon la revendication 4, **caractérisé en ce que** l'organe de commande commun comprend un manchon coulissant (17) réglable.

6. Turbocompresseur à gaz d'échappement selon la revendication 3 et 5, **caractérisé en ce que** le manchon coulissant (17) présente une matrice de réception (19) dans la zone d'une première face frontale axiale et un anneau (24) de grille de guidage dans la zone de la face frontale axiale opposée.

7. Turbocompresseur à gaz d'échappement selon l'une quelconque des revendications 1 à 6, **caractérisé en ce que** chacune des géométries de grille est associée à un organe de commande.

8. Turbocompresseur à gaz d'échappement selon la revendication 7, **caractérisé en ce que** chacun des deux organes de commande est conçu sous forme de manchon coulissant (17, 26).

9. Turbocompresseur à gaz d'échappement selon la revendication 7 ou 8, **caractérisé en ce qu'**un organe de commande (26) forme une surface de torsion (28) pour le flux massique qui traverse lorsque la grille de guidage est en position ouverte.

10. Turbocompresseur à gaz d'échappement selon l'une quelconque des revendications 1 à 9, **caractérisé en ce qu'**une chambre (15) collectrice d'air qui communique avec le canal (14) d'amenée de la roue (16) du compresseur est placée devant la roue (16) du compresseur, au moins use grille de guidage (12, 13) étant disposée au passage de la chambre collectrice d'air au canal d'amenée de la roue du compresseur.

11. Turbocompresseur à gaz d'échappement selon la revendication 10, **caractérisé en ce que** la chambre (15) collectrice d'air entoure au moins en partie radialement le canal d'amenée (14) de la roue du compresseur.

12. Turbocompresseur à gaz d'échappement selon l'une quelconque des revendications 1 à 11, **caractérisé en ce qu'**une grille (12) de guidage présente sur son étendue axiale au moins deux parties (24a, 24b, 24c) de grille dont la géométrie est différente.

13. Turbocompresseur à gaz d'échappement selon la revendication 12, **caractérisé en ce que** les parties (24a, 24b, 24c) présente un nombre différent d'aubes de grille de guidage.

14. Turbocompresseur à gaz d'échappement selon la revendication 12, **caractérisé en ce que** les aubes directrices de la grille (12) de guidage subissent une diminution de la longueur de corde - en partant d'une hauteur d'aube inférieure - lorsque la hauteur d'aube augmente.
